# EUROPEAN PATENT APPLICATION

(11) **EP 4 026 621 A1**
(43) Date of publication of application: **13.07.2022**
(21) Application number: 20861423.0
(22) Date of filing: 06.07.2020
(51) Int. Cl.: B05D 1/26, B05C 5/00, F16J 15/00

(54) **GASKET PRODUCTION METHOD**

(30) Priority: 04.09.2019 JP 2019161057
(71) Applicant: NOK Corporation, Minato-ku, Tokyo 105-8585 (JP)
(72) Inventor: MIZUSAWA, Homare, Fujisawa-shi, Kanagawa 251-0042 (JP); MIURA, Masahiro, Fujisawa-shi, Kanagawa 251-0042 (JP); GOTO, Noriyuki, Fujisawa-shi, Kanagawa 251-0042 (JP); NAKAHATA, Yushi, Fujisawa-shi, Kanagawa 251-0042 (JP)
(74) Representative: Global IP Europe Patentanwaltskanzlei
(86) International application number: PCT/JP2020/026357
(87) International publication number: WO 2021/044722

(57) **Abstract**

Provided is a manufacturing method of a gasket that can stabilize the size and shape of the gasket without a mold. The manufacturing method of the gasket includes the steps of discharging liquid rubber onto a base member using a discharge device 100, and forming a rubber gasket on the base member by curing the discharged liquid rubber. The discharge device 100 includes a valve body 111 which opens and closes a flow channel through which the liquid rubber flows and a discharge port 114 from which droplets of the liquid rubber are intermittently discharged as the valve body 111 opens and closes a valve. The discharge device 100 is a contactless-type discharge device used in a state in which the discharge port 114 is not in contact with the base member.

## Description

### [Technical Field]

The present disclosure relates to a manufacturing method which forms a gasket on a base member.

### [Background Art]

There are various manufacturing methods for forming a gasket on a separator in a fuel cell such as injection molding, screen printing or a method which uses a dispenser. The injection molding is superior in that it can stabilize a shape of the gasket, while it needs to address a fin and to use molds having different sizes and shapes for each product. The screen printing is superior in high flexibility in material selection and excellent maintainability, while a shape of a gasket tends to be unstable and this makes it difficult to obtain a desired shape. The method using a dispenser is also superior in high flexibility in material selection. In this method, a material is continuously applied while the dispenser is in contact with a base member (separator main body). This makes it difficult to keep a distance between a nozzle tip and the base member constant due to influences of a warp of the base member and accuracy issue in positioning, and a film thickness varies. Further, in an annular gasket formed using a dispenser, portions near starting and ending points of the gasket overlap each other at the point where the starting and ending points meet. This makes it difficult to obtain a gasket having a desired shape and a desired size.

An inkjet method is considered as another manufacturing method. However, this method is difficult to be applied to liquid rubber, which is used as a material of a gasket, because this method is applicable to a material with low viscosity. Every method has its advantage and disadvantage. A more appropriate manufacturing method is desired.

### [Citation List]

### [Patent Literature]

[PTL 1]
   WO 2017/212775
[PTL 2]
   Japanese Patent Application Publication No. 2016-186327

### [Summary of Invention]

### [Technical Problem]

An object of the present disclosure is to provide a manufacturing method of a gasket that can stabilize the size and shape of the gasket without a mold.

### [Solution to Problem]

In order to achieve the object, the present disclosure has adopted the following means.

That is, a manufacturing method of a gasket of the present disclosure includes steps of:
discharging liquid rubber onto a base member using a discharge device; and
forming a rubber gasket on the base member by curing the discharged liquid rubber,
wherein the discharge device includes:
   a valve body which opens and closes a flow channel through which the liquid rubber flows; and
   a discharge port from which a droplet of the liquid rubber is intermittently discharged as the valve body opens and closes a valve, and
   the discharge device is a contactless-type discharge device used in a state in which the discharge port is not in contact with the base member.

According to the present disclosure, a mold is not necessary unlike a case where injection molding is adopted because the liquid rubber is discharged by the discharge device. In addition, the present disclosure can stabilize a shape and size of the gasket as compared with a case where screen printing is adopted because droplets of the liquid rubber are intermittently discharged by the discharge device. Further, the present disclosure can keep a film thickness of the material discharged onto the base member constant as compared with a case where a dispenser is used because droplets of the liquid rubber are intermittently discharged by the contactless-type discharge device. In addition, the present disclosure can form an annular gasket avoiding a starting point and an ending point of the annular gasket from overlapping each other.

The discharge device may include an air pulse actuator which drives the valve body with compressed air.

The discharge device may include a piezo actuator which drives the valve body with a piezoelectric element.

The liquid rubber may be discharged onto a surface of a convex portion formed on the base member by the discharge device.

The liquid rubber may be a material having a viscosity of not less than 100 mPa·s and not more than 300 mPa·s after dilution.

Note that the above configurations can be adopted in combination as far as possible.

### [Advantageous Effects of Invention]

As thus far described, the present disclosure can stabilize the size and shape of the gasket without a mold.

### [Brief Description of Drawings]

[Fig. 1]

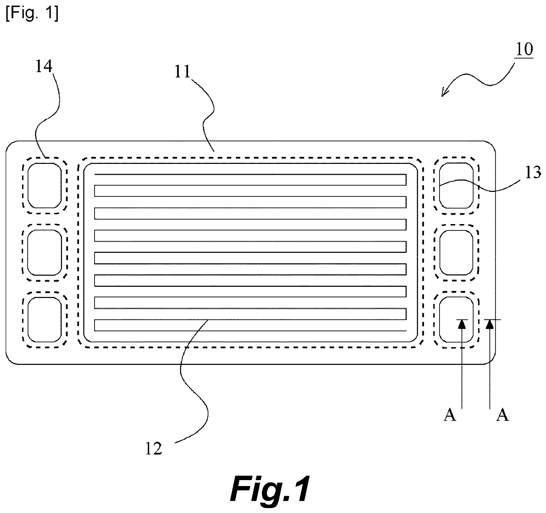

   Fig. 1 is a plan view of a separator in a fuel cell.
[Fig. 2]

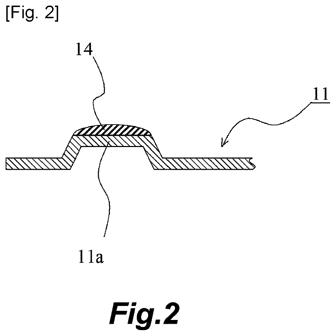

   Fig. 2 is a cross-sectional view of the separator in the fuel cell.
[Fig. 3]

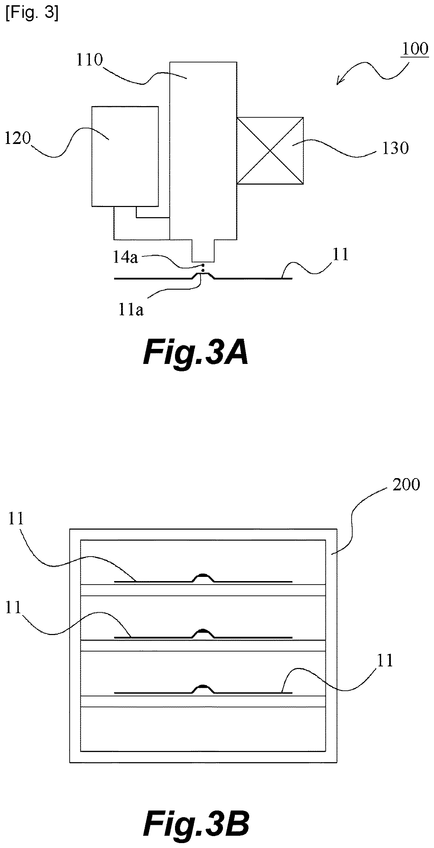

   Fig. 3 is a manufacturing process diagram of a gasket according to an embodiment of the present disclosure.
[Fig. 4]

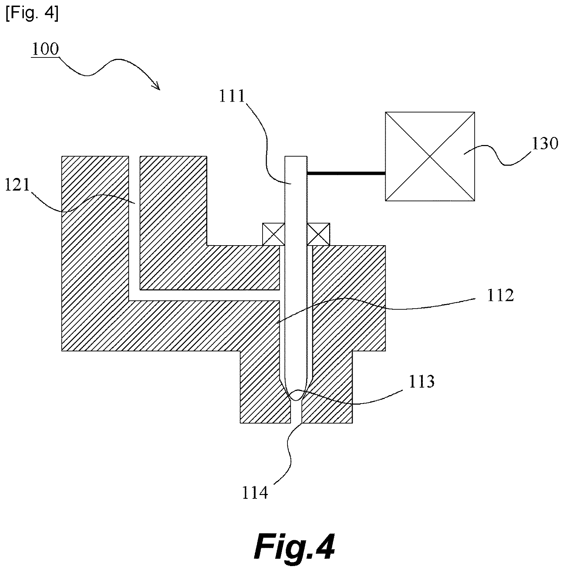

   Fig. 4 is a main configuration diagram of a discharge device according to the embodiment of the present disclosure.
[Fig. 5]

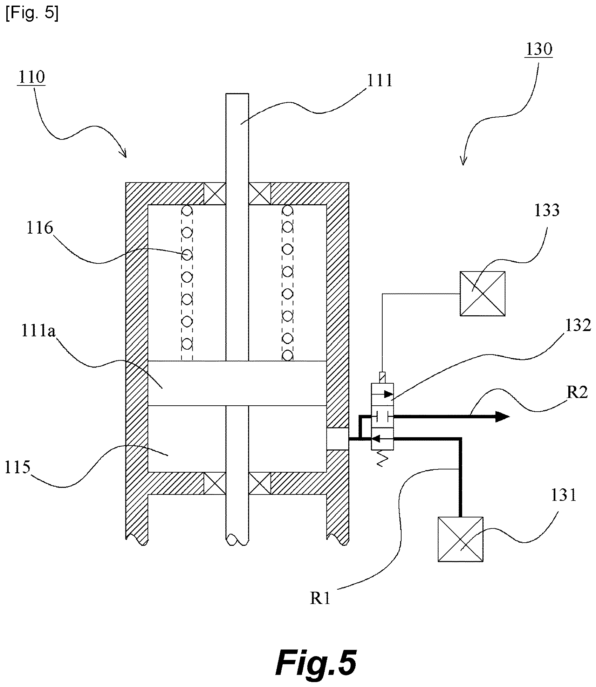

   Fig. 5 is a main configuration diagram of an air pulse actuator.
[Fig. 6]

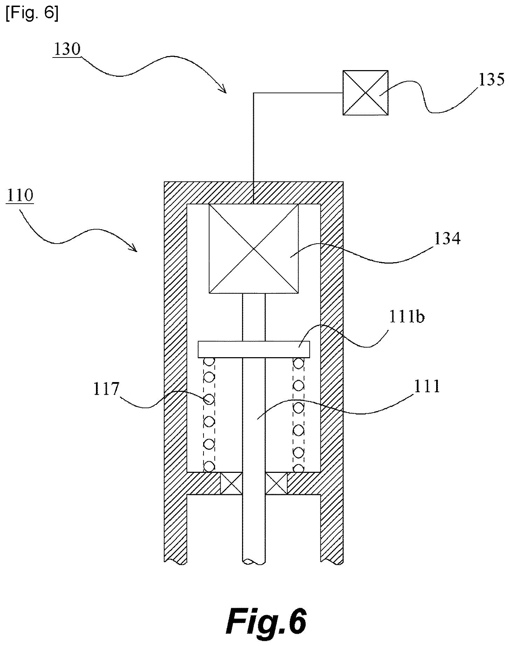

   Fig. 6 is a main configuration diagram of a piezo actuator.

### [Description of Embodiments]

Hereinbelow, a mode for carrying out the disclosure will be illustratively described in detail based on an embodiment with reference to the drawings. It should be noted that, unless otherwise specified expressly, the dimensions, materials, shapes, and relative arrangement of components described in this embodiment are not intended to limit the scope of the disclosure to the dimensions, materials, shapes, and relative arrangements thereof.

### (Embodiment)

With reference to Fig. 1 to Fig. 6, a manufacturing method of a gasket according to an embodiment of the present disclosure will be described. This embodiment will describe an example in which a gasket is formed on a separator main body in a fuel cell. Note that the manufacturing method of a gasket in the present disclosure is not limited to the example of the separator, and can also be applied to, e.g., a rubber gasket provided integrally with a metal gasket.

Fig. 1 is a plan view of the separator in the fuel cell. Fig. 2 is a cross-sectional view of the separator in the fuel cell, and is a cross-sectional view taken along the line A-A of Fig. 1. Fig. 3 illustrates a manufacturing process of a gasket according to the embodiment of the present disclosure, and schematically shows devices used in each of steps. Fig. 4 illustrates a configuration of a discharge device according to the embodiment of the present disclosure, and schematically shows only a main part of the discharge device. Fig. 5 illustrates a configuration of an air pulse actuator, and schematically shows a main part of the air pulse actuator. Fig. 6 illustrates a configuration of a piezo actuator, and schematically shows a main part of the piezo actuator.

### Separator

A description will be given of the separator on which the gasket is formed by the manufacturing method of the gasket according to the present embodiment with reference to Fig. 1 and Fig. 2. A separator 10 includes a base member 11, a flow channel 12 formed in a surface of the base member 11, and a plurality of manifolds 13 provided in the base member 11. The base member 11 is formed of metal. Note that a carbon material may be used as a material of the base member 11. The material of the base member used in the present disclosure is not limited to metal or carbon, and resin or the like can be used.

The flow channel 12 formed in the surface of the base member 11 is used as a flow channel through which fuel gas and oxidant gas flow. The fuel cell is configured as a cell stack having a plurality of single cells. The manifolds provided in the base member 11 are provided in order to distribute fuel gas, oxidant gas, and coolant to each of the cells.

In order to prevent the fuel gas or the like from leaking to the outside, rubber gaskets 14 are integrally provided around an area in which the flow channel 12 is formed and around each manifold 13. Note that, in Fig. 1, a part in which the gasket 14 is provided is indicated by a thick dotted line. A convex portion 11a (may be referred to as a bead portion) is provided on the base member 11 for increasing hermeticity, and the gasket 14 is formed on a surface of the convex portion 11a. Note that the manufacturing method of the gasket of the present disclosure can also be applied to a gasket formed on a flat surface without a convex portion.

### Production process

A description will be given of a manufacturing process in the manufacturing method of the gasket according to the present embodiment with reference especially to Fig. 3. The present manufacturing process has a first step of discharging liquid rubber 14a onto the base member 11 with a discharge device 100 (see Fig. 3(a)), and a second step of forming the rubber gasket 14 on the base member 11 by curing the discharged liquid rubber 14a (see Fig. 3(b)).

The discharge device 100 includes a main body 110, a supply device 120 which supplies a discharged material (the liquid rubber 14a in the present embodiment) to the main body 110, and an actuator 130 which drives a valve body 111 (see Fig. 4) provided in the main body 110. The discharged material may be discharged onto the base member 11 by the discharge device 100 in any of configurations where the discharge device 100 is moved while the base member 11 is fixed, the base member 11 is moved while the discharge device 100 is fixed, and both of the discharge device 100 and the base member 11 is moved.

The discharge device 100 is a contactless-type discharge device, which intermittently discharges and applies droplets of the discharged material to the base member 11 provided spaced from the discharge device 100. The discharge device 100 may be referred to as a jet dispenser.

The liquid rubber 14a serving as the discharged material is a thermosetting rubber material. In the second step, the liquid rubber 14a is cured by heating the base member 11 to which the liquid rubber 14a is applied with a heater 200, and is fixed to the base member 11. This forms the gasket 14 integrally on the base member 11.

### Discharge device

The discharge device 100 will be described in detail with reference especially to Fig. 4. Note that Fig. 4 shows only the main portion of the discharge device 100 simply, and other members constituting the discharge device 100 are omitted for the sake of simplicity. The main body 110, as described above, has the valve body 111 (may be referred to as a needle) inside thereof. The valve body 111 is configured to reciprocate (vertical movement in the drawing) in an insertion hole 112 provided in the main body 110, and a valve seat 113 is provided on a tip side (a lower side in the drawing) of the insertion hole 112. A discharge port 114 from which the discharged material is discharged is provided at a position closer to the tip side of the insertion hole 112 than the valve seat 113. Further, the flow channel 121 through which the discharged material supplied from the supply device 120 flows is connected to the insertion hole 112. A predetermined fluid pressure is applied to the discharged material supplied from the supply device 120.

According to the thus-configured discharge device 100, a valve is opened and closed by the reciprocation of the valve body 111 caused by the actuator 130, and droplets of the discharged material (the liquid rubber 14a) are intermittently discharged from the discharge port 114. When the discharge device 100 is used, the discharge port 114 is not in contact with the base member 11.

The actuator 130 is not limited to the above example and other configurations may be adopted as long as the actuator 130 can cause the valve body 111 to reciprocate. For example, an air pulse actuator which drives the valve body 111 with compressed air or a piezo actuator which drives the valve body 111 with a piezoelectric element can be used as the actuator as follows.

### Air pulse actuator

The air pulse actuator will be described with reference to Fig. 5. Fig. 5 illustrates main constituent members related to the air pulse actuator in the main body 110 in the discharge device 100 in a schematic cross-sectional view. In addition, Fig. 5 illustrates configurations related to the air pulse actuator provided outside the main body 110 in a circuit diagram.

In the air pulse actuator, a piston 111a is provided in the valve body 111. A sealed space 115 is formed by the piston 111a. A spring 116 which presses the piston 111a toward the sealed space 115 is provided on a side opposite to the sealed space 115 with respect to the piston 111a.

The discharge device 100 has an air pump 131 for sending compressed air to the sealed space 115 via a supply passage R1 and an exhaust passage R2 for exhausting air in the sealed space 115 on the outside of the main body 110. In addition, the discharge device 100 has an electromagnetic valve 132 for closing or opening the supply passage R1 and closing or opening the exhaust passage R2, and a control device 133 which controls the electromagnetic valve 132.

Fig. 5 shows a state in which the supply passage R1 is opened and the exhaust passage R2 is closed by the electromagnetic valve 132. In this state, the compressed air is sent to the sealed space 115 from the air pump 131, the valve body 111 moves upward in Fig. 5 against the pressing force of the spring 116 together with the piston 111a, and the valve is opened. Although not shown in the drawing, the supply passage R1 is closed and the exhaust passage R2 is opened when the electromagnetic valve 132 is switched by the control device 133. In this state, gas in the sealed space 115 is exhausted, the valve body 111 is caused to move downward in Fig. 5 by the pressing force of the spring 116 together with the piston 111a, and the valve is closed. As seen from the above, the valve can be opened and closed by causing the valve body 111 to reciprocate by switching of the electromagnetic valve 132 by the control device 133.

### Piezo actuator

The piezo actuator will be described with reference to Fig. 6. Fig. 6 illustrates main constituent members related to the piezo actuator in simplified manner. In the piezo actuator, the valve body 111 is mounted to a piezoelectric element 134. The valve body 111 has a flange portion 111b. The piezo actuator 130 has a spring 117 which presses the flange portion 111b toward the piezoelectric element 134. The piezo actuator 130 has a voltage supply device 135 which applies a voltage to the piezoelectric element 134 and can control the applied voltage. This configuration allows the valve body 111 to move downward in the drawing against the pressing force of the spring 117 and the valve to be closed as the piezoelectric element 134 expands when the voltage applied to the piezoelectric element 134 is controlled by the voltage supply device 135. On the other hand, the valve body 111 is caused to move upward in the drawing by the pressing force of the spring 117 and to be opened as the piezoelectric element 134 contracts. Thus, the valve can be opened and closed by causing the valve body 111 to reciprocate as the piezoelectric element 134 expands or contracts in accordance with the voltage applied to the piezoelectric element 134 that is controlled by the voltage supply device 135.

### Various conditions of discharged material

The liquid rubber 14a is used as the discharged material, as described above. The liquid rubber 14a include, for example, liquid fluororubber, EPDM, and silicone rubber. In the case where the liquid fluororubber is used, a material having a viscosity after dilution of not less than 100 mPa·s and not more than 300 mPa·s which is obtained by using a material having a viscosity of an undiluted solution of not less than 100 Pa·s and not more than 280 Pa·s, and setting a dilution ratio (solid content concentration) to not less than 40 wt% and not more than 60 wt% by using a diluent (e.g., a fluorine agent thinner). The viscosity after dilution of the liquid rubber 14a used as the material of the gasket 14 is set to a relatively high viscosity. The reasons for this is briefly explained below. The first reason is that a film thickness needed for seal performance can be achieved by one-time application. If the viscosity of the material is low, repeating the first step and the second step described above and forming a film having a plurality of layers are needed to obtain the film thickness required for the seal performance because the film thickness achieved by one-time application is small. The second reason is that the liquid rubber 14a, which is applied to the surface of the convex portion 11a provided on the base member 11, needs to be prevented from slipping from the convex portion 11a. Thus, an inkjet method is not usable because the liquid rubber 14a used as the material of the gasket 14 is desirable to have the relatively high viscosity after dilution.

### Conditions of discharge device using air pulse actuator

A description will be given of various conditions of the discharge device 100 using the air pulse actuator as the actuator 130. An operating air pressure by the air pump 131 may be set to a range of not less than 0.1 MPa and not more than 0.5 MPa. A valve diameter (a diameter of the discharge port 114) may be set to about 200 µm. The valve may be operated at ambient temperature without specific valve temperature control. The hydraulic pressure (syringe pressure) of the discharged material may be set to about 0.11 MPa. The cycle (cycle of opening or closing of the valve by the electromagnetic valve 132) may be set to not less than 15 msec and not more than 20 msec.

### Conditions of discharge device using piezo actuator

A description will be given of various conditions of the discharge device 100 using the piezo actuator as the actuator 130. A voltage applied to the piezoelectric element 134 may be set to not less than 80 V and not more than 120 V. The valve diameter (the diameter of the discharge port 114) may be set to not less than 200 µm and not more than 300 µm. The valve temperature control may be set to not less than ambient temperature and not more than 50°C. The hydraulic pressure (syringe pressure) of the discharged material may be set to not less than 0.1 MPa and not more than 0.5 MPa. The cycle (cycle of opening or closing of the valve by the piezoelectric element 134) may be set to not less than 15 msec and not more than 30 msec.

### Advantage of manufacturing method of the gasket according to present embodiment

The manufacturing method of the gasket of the present embodiment does not use a mold unlike injection molding because the liquid rubber 14a is discharged by the discharge device 100. This make it possible to produce various products having different sizes and shapes only by changing movement control of the discharge device 100 and the base member 11. This reduces cost as compared with injection molding, because there is no need to address a fin and to prepare molds for each product.

The manufacturing method of the gasket of the present embodiment stabilizes the shape and size of the gasket as compared with screen printing because droplets of the liquid rubber are intermittently discharged by the discharge device. In the screen printing, an application material is applied onto a base member via a mesh of a mask using a squeegee. This method increases a roughness of a surface of the applied material due to a mesh mark remaining on the surface. In contrast, the surface of the applied material achieved by discharging droplets of the liquid rubber in the present embodiment is smooth, resulting in reduced roughness of the surface. In addition, it is known that the screen printing may cause a phenomenon (referred to as a saddle phenomenon) in which both sides in a width direction (lateral direction) are higher than a central part when a material is applied to a surface of a convex portion (bead). This phenomenon may reduce sealing performance of the gasket. In contrast, the gasket 14 obtained by the production method according to the present embodiment has a shape (dome-like shape) in which the central part in the width direction is higher than both sides in the width direction, resulting in stable sealing performance.

Note that the manufacturing method according to the present embodiment can form a gasket 14 that straddles a stepped portion on the surface of the base member. In contrast, the screen printing cannot form the gasket that straddles the stepped portion provided on the surface of the base member. In addition, in the screen printing, exposure of the material to the air increases a volatilization amount of a volatile substance, resulting in reduced material quality and a low yield. In contrast, the manufacturing method according to the present embodiment has no such an issue and can enhance the yield.

The present embodiment in which droplets of the liquid rubber are intermittently discharged by the contactless-type discharge device can keep the film thickness of the material discharged onto the base member constant as compared with a case using a typical dispenser. In addition, the present embodiment can form an annular gasket, in which portions near starting and ending points of the gasket does not overlap each other at the point where the starting and ending points meet. The typical dispenser applies material continuously while the dispenser is in contact with the base member (separator main body). This makes it difficult to keep a distance between a nozzle tip and the base member constant due to influences of a warp of the base member and accuracy issue in positioning, resulting in variation in the film thickness. In addition, in the case where the annular gasket is formed, the material needs to be doubly discharged to the portion where the starting and ending points of the annular gasket meet. This makes it difficult to obtain a gasket having a desired shape and a desired size because the film thickness varies and the material is doubly discharged to particularly the portion where the starting and ending points of the annular gasket meet. The manufacturing method of the present embodiment can easily change and control the film thickness and the width of the applied material by adjusting the viscosity of the discharged material and controlling the cycle (the cycle of opening or closing of the valve body 111 by the electromagnetic valve 132 or the piezoelectric element 134). Further, a gasket having desired shape and size can be obtained by the manufacturing method of the present embodiment because it can keep the film thickness of the applied material constant and form an annular gasket without doubly discharging material to the portion where the starting and ending points of the gasket meet.

Note that, the liquid rubber 14a is difficult to be used in an inkjet method because viscosity of material applicable to the inkjet method is about 2 mPa·s to 25 mPa·s.

### [Reference Signs List]

- 10: Separator
- 11: Base material
- 11a: Convex portion
- 12: Flow channel
- 13: Manifold
- 14: Gasket
- 14a: Liquid rubber
- 100: Discharge device
- 110: Main body
- 111: Valve body
- 111a: Piston
- 111b: Flange portion
- 112: Insertion hole
- 113: Valve seat
- 114: Discharge port
- 115: Sealed space
- 116, 117: Spring
- 120: Supply device
- 121: Flow channel
- 130: Actuator
- 131: Air pump
- 132: Electromagnetic valve
- 133: Control device
- 134: Piezoelectric element
- 135: Voltage supply device
- 200: Heater
- R1: Supply passage
- R2: Exhaust passage

## Claims

1. A manufacturing method of the gasket comprising the steps of: discharging liquid rubber onto a base member using a discharge device; and
forming a rubber gasket on the base member by curing the discharged liquid rubber, wherein
the discharge device includes:
a valve body which opens and closes a flow channel through which the liquid rubber flows, and
a discharge port from which a droplet of the liquid rubber is intermittently discharged as the valve body opens and closes a valve, and
the discharge device is a contactless-type discharge device used in a state in which the discharge port is not in contact with the base member.

2. The manufacturing method of the gasket according to claim 1, wherein the discharge device includes an air pulse actuator which drives the valve body with compressed air.

3. The manufacturing method of the gasket according to claim 1, wherein the discharge device includes a piezo actuator which drives the valve body with a piezoelectric element.

4. The manufacturing method of the gasket according to claim 1, 2, or 3, wherein the liquid rubber is discharged onto a surface of a convex portion formed on the base member by the discharge device.

5. The manufacturing method of the gasket according to any one of claims 1 to 4, wherein the liquid rubber is a material having a viscosity of not less than 100 mPa·s and not more than 300 mPa·s after dilution.

## Amended claims

### Amended claims under Art. 19.1 PCT

1. A manufacturing method of the gasket comprising the steps of:
discharging thermosetting liquid rubber onto a base member using a discharge device; and
forming a rubber gasket on the base member by curing the discharged liquid rubber by heating, wherein
the discharge device includes:
a valve body which opens and closes a flow channel through which the liquid rubber flows, and
a discharge port from which a droplet of the liquid rubber is intermittently discharged as the valve body opens and closes a valve, and
the discharge device is a contactless-type discharge device used in a state in which the discharge port is not in contact with the base member.

2. The manufacturing method of the gasket according to claim 1, wherein the discharge device includes an air pulse actuator which drives the valve body with compressed air.

3. The manufacturing method of the gasket according to claim 1, wherein the discharge device includes a piezo actuator which drives the valve body with a piezoelectric element.

4. The manufacturing method of the gasket according to claim 1, 2, or 3, wherein the liquid rubber is discharged onto a surface of a convex portion formed on the base member by the discharge device.

5. The manufacturing method of the gasket according to any one of claims 1 to 4, wherein the liquid rubber is a material having a viscosity of not less than 100 mPa·s and not more than 300 mPa·s after dilution.
